# EUROPEAN PATENT APPLICATION

(11) **EP 4 492 556 A1**
(43) Date of publication of application: **15.01.2025**
(21) Application number: 24166242.8
(22) Date of filing: 26.03.2024
(51) Int. Cl.: H01M 50/367, H01M 50/342, H01M 50/271, H01M 10/613, H01M 50/358, H01M 10/6556, H01M 10/6554, H01M 50/207, H01M 50/30, H01M 10/625

(54) **BATTERY PACK**

(30) Priority: 26.03.2023 KR 20230039405; 14.07.2023 KR 20230092045
(71) Applicant: Samsung SDI Co., Ltd., Yongin-si, Gyeonggi-do 17084 (KR)
(72) Inventor: RYU, Jaelim, 17084 Yongin-si (KR)
(74) Representative: Marks & Clerk LLP

(57) **Abstract**

A battery pack includes battery cells including vent parts, a first cover on the battery cells, the first cover including vent holes corresponding to the vent parts, respectively, and a second cover overlapping the first cover and including vent covers corresponding to the vent holes in the first cover, respectively, each of the vent covers including a fracture line and a hinge part in a periphery of the vent cover, and the hinge part and a part of the fracture line in the second cover having a non-overlapping relationship with a corresponding one of the vent holes in the first cover.

## Description

### BACKGROUND

### 1. Field

One or more embodiments relate to a battery pack.

### 2. Description of the Related Art

Generally, a secondary cell is a cell that is chargeable and dischargeable, which is different from a primary cell that is not rechargeable. Secondary cells are used as energy sources for, e.g., mobile devices, electric cars, hybrid cars, electric bicycles, uninterrupted power supplies, etc. Secondary cells are used in the form of a single cell or a modular form, depending on the type of an external device that uses the secondary cells. A number of secondary cells are connected as a unit in the modular form.

A small mobile device, e.g., a mobile phone, can be operated for a predetermined time with the output and capacity of a single secondary cell. However, if a long-time operation and/or a high-power operation, e.g., driving, are needed, e.g., an electric car or a hybrid car that consume much electricity, a modular form including a plurality of secondary cells is preferred due to its large output and capacity, so an output voltage and an output current can be increased depending on the number of secondary (e.g., embedded) cells.

### SUMMARY

According to one or more embodiments, a battery pack includes a plurality of battery cells including vent parts, a first cover member including vent holes respectively corresponding to the vent parts, and a second cover member including a vent cover corresponding to the vent holes, a fracture line forming a part of a periphery of the vent cover and a hinge part forming a part of a remaining periphery of the vent cover, wherein the second cover member may be arranged to overwrap the first cover member to make a part of the fracture line and the hinge part disposed outside of the vent hole corresponding thereto.

One or more embodiments include a battery pack which has a vent cover structure capable of making it easy to discharge vent gas and prevent backflow of a discharge gas and byproduct.

One surface of the first cover member may be arranged to abut the vent parts and another surface of the first cover member may be arranged to abut the second cover member.

The hinge part may be arranged in such a manner that the vent cover opens in a direction that the second cover member does not meet the first cover member, based on a fracture of the fracture line.

The vent hole may have a shape to match the vent parts, and a part of the fracture line and the hinge part may be supported on a surface of the first cover member adjoining the second cover member outside of the vent hole.

A width of the vent cover formed between the hinge part and the fracture line may be greater than a width of the vent hole corresponding to the vent cover.

The fracture line may have a C-shape with an opening at the hinge part.

The first cover member and the second cover member may each include a MICA sheet, a ceramic sheet, aluminum with a thickness less than or equal to 1 mm, carbon steel, an engineering plastic, and a Teflon film.

The first cover member and the second cover member may include different materials from each other.

The plurality of battery cells may be arranged in a first direction so that the vent parts are positioned on a plane, the first cover member may include a plurality of the vent holes arranged in a row, each of the vent holes being arranged in the first direction so that each of the plurality of vent holes corresponds to each of the vent parts, and the second cover member may include the plurality of vent covers arranged in a row, each of the vent covers being arranged in the first direction so that each of the plurality of vent covers corresponds to each of the vent holes.

The battery cell may include an anode terminal and a cathode terminal on one surface in a height direction, the vent parts may be provided on another surface opposite to the one surface, and the first cover member and the second cover member may be provided to abut the vent parts.

The battery pack may further include a cooling plate including a plane extending in the first direction and placed to abut the other surface of the battery cell, wherein the first cover member may be placed between the other surface of the battery cell and the cooling plate, and the second cover member may be placed between the first cover member and the cooling plate.

An anode terminal and a cathode terminal may be placed on a surface of the battery cell, and the vent parts may be placed between the anode terminal and the cathode terminal so that the first cover member and the second cover member meet the vent parts.

The vent part may include a first vent part and a second vent part which are placed on different surfaces of the battery cell, wherein an anode terminal and the first vent part may be placed on one side surface of each of the battery cell, a cathode terminal and the second vent part may be placed on another side surface corresponding to the one side surface, and the plurality of the battery cells may be arranged in the first direction so as to place the first vent part on one plane and to place the second vent part on another plane, and wherein a pair of the first cover members and a pair of the second cover members may be placed to meet the first vent part and the second vent part, respectively.

At least some of the above and other features of the invention are set out in the claims.

### BRIEF DESCRIPTION OF THE DRAWINGS

Features will become apparent to those of skill in the art by describing in detail example embodiments with reference to the attached drawings, in which:
FIG. 1 is a perspective view of a battery pack according to some embodiments;
FIG. 2 is an exploded perspective top view of a battery pack according to some embodiments;
FIG. 3 is an exploded perspective bottom view of a battery pack according to some embodiments;
FIG. 4A is a plan view of a first cover member according to some embodiments;
FIG. 4B is a plan view of a second cover member according to some embodiments;
FIG. 4C is a plan view of a cover assembly according to some embodiments;
FIG. 5A is a view showing a state in which external pressure is exerted in one direction on a cover assembly according to some embodiments;
FIG. 5B is a view showing a state in which external pressure is exerted on a cover assembly in another direction according to some embodiments;
FIG. 6 is a view of a battery pack in which a vent part is disposed on an upper part according to some embodiments;
FIG.7 is a partially enlarged view of the battery pack of FIG. 6;
FIG. 8 is an exploded perspective view of the battery pack of FIG. 6;
FIG. 9 is a perspective view of a battery pack in which a vent part is disposed at a side according to some embodiments; and
FIG. 10 is an exploded perspective view of the battery pack shown in FIG. 9.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

As used herein, the term "and/or" includes any and all combinations of one or more of the associated listed items. Expressions such as "at least one of," when preceding a list of elements, modify the entire list of elements and do not modify the individual elements of the list.

The terms including an ordinal number, such as "the first", and "the second" may be used for explaining various elements, but such elements are not limited by such terms. The term is used only for the purpose of distinguishing the one element from the other element. For example, a first element may be named as a second element, and similarly a second element may be named as a first element, without departing from the scope of the present disclosure.

The terms used in the present disclosure is used for explaining embodiments, but it is not intended to limit and/or define the present disclosure. A singular expression covers a plural expression, unless otherwise expressed evidently. In this application, it should be understood that the terms such as "comprise," "include," or "have" are intended to specify the existence of features, numbers, steps, operations, components, parts, or combinations thereof described in the specification and should not preclude the presence or addition of one or more other features or numbers, steps, operations, components, components, or combinations thereof in advance. The same reference numerals shown in each drawing represent members that perform substantially the same functions.

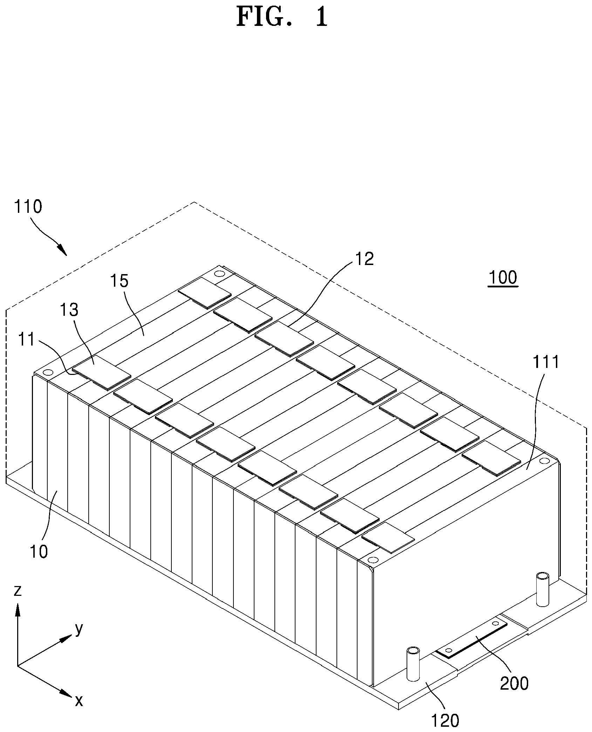

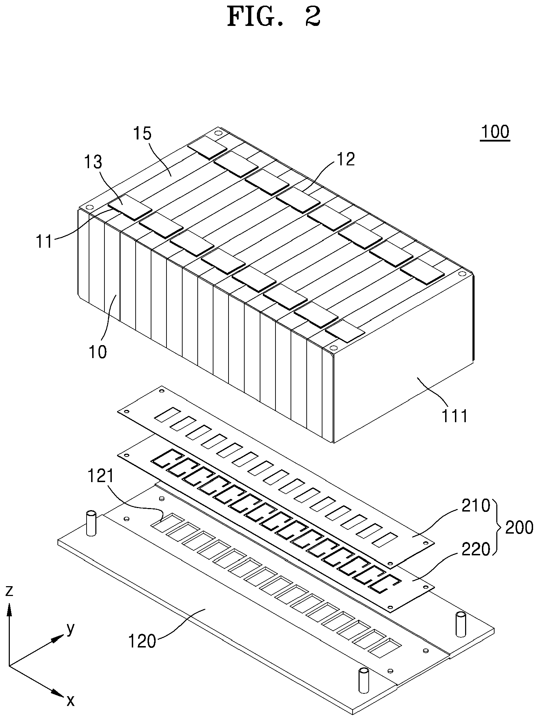

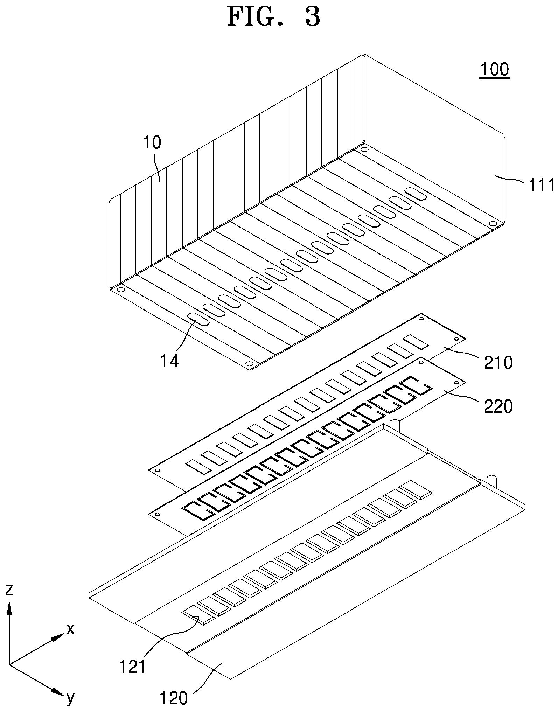

FIG. 1 is a perspective view of a battery pack according to some embodiments. FIG. 2 is an exploded perspective top view of the battery pack in FIG. 1, and FIG. 3 is an exploded perspective bottom view of the battery pack in FIG. 1.

Referring to FIGS. 1 to 3, a battery pack 100 according to some embodiments may include a plurality of battery cells 10 in a housing 110, and a cover assembly 200 on the battery cells 10. The cover assembly 200 may cover vent parts 14 included in the plurality of battery cells 10, and may allow a gas from the vent parts 14 to pass in one direction.

In detail, referring to FIGS. 1-2, each of the battery cells 10 according to some embodiments may include a first electrode terminal 11 and a second electrode terminal 12, which have different polarities. The first and second electrode terminals 11 and 12 may be placed on upper ends in a height direction (e.g., a Z direction) of the battery cell 10. For example, the battery cell 10 may have a prismatic shape of a hexahedron, and the first electrode terminal 11 and the second electrode terminal 12 may be placed on a terminal side 15 positioned on the upper end of hexahedron.

As illustrated in FIG. 3, the battery cell 10 according to some embodiments may include the vent parts 14. The vent parts 14 may be designed to have a relatively weak strength, so that each of the vent parts 14 is located on a side surface of the battery cell 10 with a function of fracturing and discharging a gas to the outside when an inner pressure in the battery cell 10 increases. For example, in the battery cell 10 having the prismatic shape of a hexahedron, the vent parts 14 may be positioned on a lower surface opposite to the upper surface on which the first and second electrode terminals 11 and 12 are positioned. For example, as illustrated in FIG. 3, each of the vent parts 14 may be positioned at a center of the lower surface in the height direction (e.g., the Z direction) of the battery cell 10. In another example, the vent parts 14 may be arranged on the upper or side surface of the battery cell 10 as necessary, and may be biased on a side surface.

The plurality of the battery cells 10 in the battery pack 100 according to some embodiments may be arranged (e.g., to be adjacent to each other) in a first direction (e.g., an X direction). The plurality of the battery cells 10 may be arranged in the first direction (e.g., the X direction) and accommodated in the housing 110. The housing 110 may accommodate the plurality of the battery cells 10 and a pair of end plates 111 disposed at either end in the first direction (e.g., the X direction). The end plates 111 may be in surface-contact with outermost battery cells 10, respectively, so that the plurality of the battery cells 10 may be pressed inward.

In some embodiments, the first electrode terminals 11 and the second electrode terminals 12 may form rows, respectively, in the first direction (e.g., the X direction) on the upper surface of the plurality of the battery cells 10 arranged in the first direction (e.g., the X direction). For example, the first electrode terminal 11 and the second electrode terminal 12 may be formed on the terminal side 15 of the plurality of the battery cell 10 arranged in the first direction (e.g., the X direction), wherein the first electrode terminal 11 and the second electrode terminal 12 have different polarities from each other and are arranged in a second direction (e.g., a Y direction) crossing the first direction (the X direction). For example, as illustrated in FIG. 2, each battery cell 10 may have a longitudinal direction in the second direction (e.g., the Y direction), and the first electrode terminal 11 and the second electrode terminal 12 may be arranged to be formed on opposite sides of the top surface (i.e., the terminal side 15) of the battery cell 10 in the second direction (e.g., the Y direction) in the plurality of the battery cells 10 arranged in the first direction (e.g., the X direction).

A bus bar 13 may electrically connect the first electrode terminal 11 of one battery cell 10 to the second electrode terminal 12 of an adjacent battery cell 10. The bus bar 13 may electrically connect the first to the second electrode terminals 11 and 12 arranged in the first direction (e.g., X direction). For example, the first and second rows of the bus bar 13 may be formed on either side in the second direction, e.g., the first and second rows of the bus bar 13 may be spaced apart from each other in the second direction (e.g., the Y direction), along the plurality of the battery cells 10 arranged in the first direction (e.g., the X direction).

Referring to FIG. 3, the cover assembly 200 according to some embodiments may be placed to abut (e.g., face and contact or adjoin) a surface on which the vent parts 14 are placed, wherein the plurality of the battery cells 10 are arranged in a row, so that the cover assembly 200 may cover each of the vent parts 14, e.g., the cover assembly 200 may continuously cover all the vent parts 14. If a gas is discharged out of the vent part 14, the cover assembly 200 may open in one direction so as to allow the discharging gas to exit the battery cell 10, while the cover assembly 200 is prevented from opening in the opposite direction so as to block an external gas and foreign materials from entering the battery cell 10.

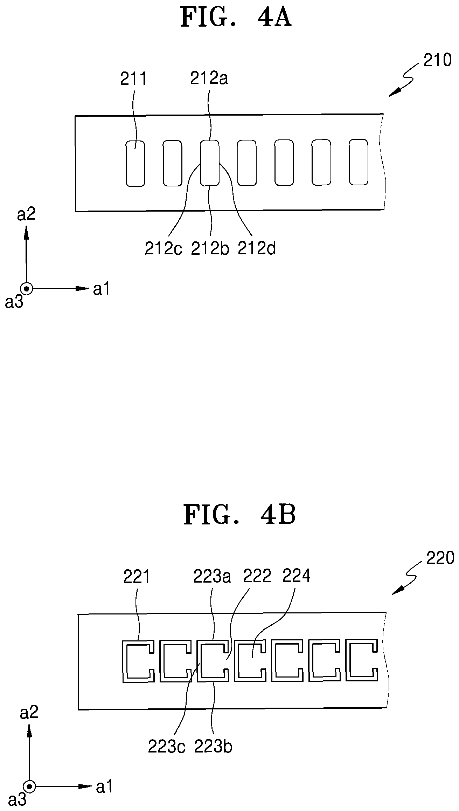

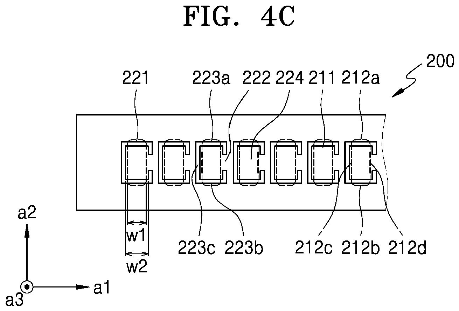

As illustrated in FIG. 3, the cover assembly 200 may include a first cover (e.g., a first cover member 210) and a second cover (e.g., a second cover member 220). In some embodiments, the first cover member 210 and the second cover member 220 may be superimposed on each other so as to constitute the cover assembly 200. The construction and the function of the cover assembly 200 will be described in more detail below with reference to FIGS. 4 to 8.

In some embodiments, the battery pack 100 may further include a cooling plate 120. The cooling plate 120 may be placed to abut a surface of each of the plurality of the battery cell 10 arranged in a row. For example, the cooling plate 120 may be positioned at a lower end surface in the height direction (the Z direction) of the battery cell 10, e.g., the cooling plate 120 may continuously overlap the lower surfaces of all the battery cells 10. In some embodiments, the cooling plate 120 may include pack vents 121, each of which corresponds to (e.g., overlaps) each of vent parts 14 included in the battery cells 10 arranged in the first direction (the X direction).

FIG. 4A is a partial plan view of the first cover member 210 according to some embodiments, FIG. 4B is a partial plan view of the second cover member 220 according to some embodiments, and FIG.4C is a partial plan view of the cover assembly 200 according to some embodiments.

Referring to FIGS. 4A to 4C, the cover assembly 200 according to some embodiments may include the first cover member 210 and the second cover member 220. The cover assembly 200 may be formed by the superposition of the first cover member 210 and the second cover member 220.

Referring to FIG. 4A, in some embodiments, the first cover member 210 may include a plurality of vent holes 211. The plurality of vent holes 211 may be arranged, e.g., adjacent to each other, along a lengthwise direction (e.g., an a1 direction) of the first cover member 210, e.g., the lengthwise direction of the first cover member 210 may extend in the second direction (i.e., the a1 direction of FIG. 4A may extend in the Y direction of FIG. 3). Each of the vent holes 211 may have such a shape as to be matched, e.g., overlap, with the vent part 14 placed on the battery cell 10. For example, each vent hole 211 may have a rectangular shape with a short axis in the lengthwise direction (a1 direction) of the first cover member 210 and a long axis in a width direction (a2 direction) of the first cover member 210, so as to be matched with the vent part 14 of the battery cells 10 arranged in a row. Each vent hole 211 may be displaced, e.g., spaced apart, from each other in the lengthwise direction (e.g., a1 direction) of the first cover member 210, according to an interval between the plurality of the battery cells 10 arranged in a row, e.g., a space between centers of adjacent vent holes 211 in the a1 direction may equal a space between centers of adjacent vent parts 14 in the second direction (the Y direction).

Referring to FIG. 4B, in some embodiments, the second cover member 220 may include a plurality of vent covers 224, respective fracture lines 221 surrounding the vent covers, and respective hinge parts 222. The plurality of vent covers 224, the respective fracture lines 221, and the respective hinge parts 222 may be arranged, e.g., adjacent to each other, along a lengthwise direction (e.g., the a1 direction) of the second cover member 220. The vent covers 224 may be arranged in such a manner that they are spaced apart from each other in the lengthwise direction (e.g., the a1 direction) of the second cover member 220 according to the spacing between the plurality of battery cells 10 arranged in a row, a space between centers of adjacent vent covers 224 in the a1 direction may equal a space between centers of adjacent vent parts 14 in the second direction (the Y direction).

The vent cover 224 may have a shape corresponding to (e.g., overlapping) the vent hole 211. For example, the vent cover 224 may have such a shape as to cover (e.g., vertically overlap) at least part of the vent hole 211. For example, the vent cover 224 may have a rectangular shape formed in such a manner that its length in the lengthwise direction (e.g., the a1 direction) of the second cover member 220 is greater than the length of the vent hole 211 (in the a1 direction), and its width in the width direction (e.g., the a2 direction) of the second cover member 220 is shorter than the width of the vent hole 211 (in the a2 direction). In another example, the vent cover 224 may have a rectangular shape formed in such a manner that its length is shorter than the length of the vent hole 211 and its width is longer than the width of the vent hole 211.

As further illustrated in FIG. 4B, the fracture line 221 and the hinge part 222 may form a periphery of the vent cover 224. The fracture line 221 may form a partial periphery of the vent cover 224. For example, the fracture line 221 may have such a shape as to surround three sides of the vent cover 224 in the rectangular shape. The fracture line 221 may have such a shape as to surround three sides of the vent cover 224 in the rectangular shape and a part of the remaining side. The hinge part 222 may be formed at the remaining side (i.e., where the fracture line 221 is not formed) along a periphery of the vent cover 224. For example, the fracture line 221 may have a C-shape opening at the hinge part 222. For example, as illustrated in FIG. 4B, the fracture line 221 may extend continuously around entire three sides and partially around a fourth side of a periphery (e.g., a boundary) of the vent cover 224, and the hinge part 222 may extend along the fourth side of the periphery (e.g., the boundary) of the vent cover 224 between opposite terminal ends of the fracture lines 221, such that a combined structure of the fracture line 221 and the hinge part 222 may completely surround a perimeter of the vent cover 224 in a top view.

In some embodiments, the fracture line 221 may be formed to have a thickness (e.g., along the a3 direction) smaller than that of the hinge part 222 on a plane of the second cover member 220. For example, grooves may be formed along the fracture line 221 on the plane of the second cover member 220, so that the thickness of the fracture line 221 may be formed to be smaller than that of the second cover member 220 (e.g., along the a3 direction). In some embodiments, the fracture line 221 may be formed to penetrate the plane of the second cover member 220.

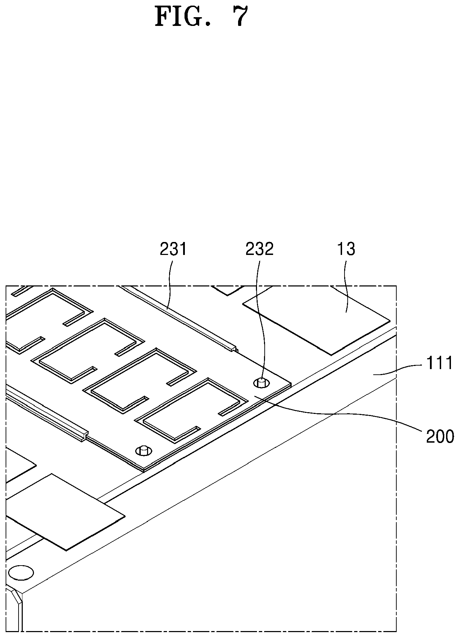

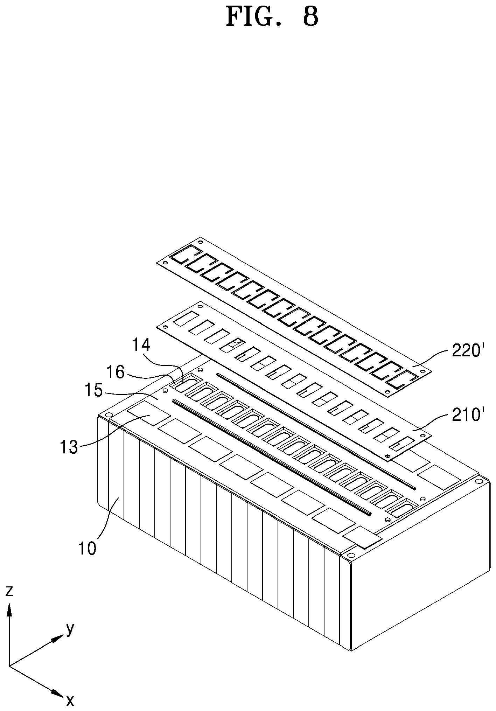

For example, as illustrated in FIG. 4B, the hinge part 222 may have the same thickness as a plane thickness of the second cover member 220 (e.g., along the a3 direction). In another example, grooves shallower than those along the fracture line 221 may be formed along the hinge part 222 on the plane of the second cover member 220, such that the total thickness of the hinge part 222 may be formed to be larger than the thickness of the fracture line 221 in the thickness direction (a3 direction) of the second cover member 220. Accordingly, if an external pressure is exerted on the second cover member 220, the fracture line 221 may be fractured before the hinge part 222 (e.g. due to the smaller thickness). With regard to the fracture of the fracture line 221 and the opening shape of the vent cover 224, it will be described later with reference to FIGS. 7 and 8.

Each of the first cover member 210 and the second cover member 220 may include a thin sheet. In some embodiments, each of the first cover member 210 and the second cover member 220 may independently include, e.g., at least one of a polysilicate sheet (e.g., a MICA sheet), ceramic sheet, an aluminum sheet with a thickness equal to or smaller than 1 mm, a carbon steel sheet, an engineering plastic sheet, and a polytetrafluroethylene film (e.g., a Teflon^{®} film). For example, the first cover member 210 and the second cover member 220 may be formed from different materials from each other.

The first cover member 210 and the second cover member 220 may be arranged to be superimposed over each other, e.g., completely overlap each other in the Z direction. In order to let the respective vent covers 224 correspond to (e.g., overlap) the vent holes 211, the first cover member 210 and the second cover member 220 may be superimposed over each other for their arrangement.

In some embodiments, when the first and second cover members 210 and 220 are vertically (e.g., along the Z direction) superimposed over each other, a portion of the fracture line 221 (forming the periphery of the vent cover 224) and the hinge part 222 may be placed to be positioned outside of the vent hole 211 (e.g., not overlapping the vent hole 211 or having a non-overlapping relationship with the vent hole 211 in the Z direction). In detail, referring to FIGS. 4A and 4B, the first cover member 210 may be formed with the vent hole 211 in a rectangular shape, which is surrounded by a first to a fourth sides 212a, 212b, 212c and 212d, and the second cover member 220 may be arranged with the vent cover 224 surrounded by the fracture line 221 including a first to a third groove parts 223a, 223b, 223c and the hinge part 222. For example, when the first cover member 210 and the second cover member 220 are placed to be superimposed over each other, the first groove part 223a and the second groove part 223b of the fracture line 221 may be opposite each other and positioned nearer to a center of the vent hole 211 than the corresponding first and second sides 212a and 212b of the vent hole 211, so that the first groove part 223a and the second groove part 223b may be located inside of (e.g., may vertically overlap) the vent hole 211. Further, the third groove part 223c of the fracture line 221 and the hinge part 222 may be positioned farther from the center of the vent hole 211 than the corresponding third and fourth sides 212c and 212d of the vent hole 211, so that the third groove part 223c of the fracture line 221 and the hinge part 222 may be located outside of the vent hole 211 (e.g., overlapping a surface of the first cover member 210 rather than the vent hole 211 in the vertical direction).

A part of the fracture line 221 and the hinge part 222 may be arranged in such a way that they are supported by a surface of the first cover member 210 adjoining the second cover member 220 outside of the vent hole 211. In detail, as illustrated in FIG. 4C, a second width w2 of the vent cover 224 may be formed to exceed a first width w1 of the vent hole 211 in the lengthwise direction (e.g., the a1 direction) of the first and the second cover members 210 and 220. Therefore, when the first cover member 210 and the second cover member 220 are placed to be superimposed, the fracture line 221 forming a width of the vent cover 224 and the hinge part 222 are placed outside of the vent hole 211 and are supported by the plane (i.e., by the surface) of the first cover member 210. For example, the second width w2 between the third groove part 223c of the fracture line 221 and the hinge part 222 may be greater than the first width w1 between the third side 212c and the fourth side 212d of the vent hole 211. Thus, it is possible to support the third groove part 223c and the hinge part 222 (which are external with respect to the vent hole 211 due to the larger second width w2) on a plane (i.e., a surface) of the first cover member 210. The first groove part 223a and the second groove part 223b corresponding to another part of the fracture line 221 are placed inside of the vent hole 211(i.e., vertically overlapping the vent hole 211), so that they are arranged not to be supported by any surface of the first cover member 210.

For example, as illustrated in FIGS. 4A to 4C, the vent hole 211 may have a rectangular shape with round edges. In another example, the vent hole 211 may have various shapes, e.g., an elliptical shape, according to a shape of the vent parts 14 included in the battery cell 10. For example, as illustrated in FIGS. 4B-4C, the fracture line 221 may have an angular C-shape. In another example, the fracture lines 221 may have various shapes, e.g., a round C-shape. For example, as illustrated in FIG. 4B, the angular C-shaped fracture line 221 may be arranged with the hinge part 222 placed at a side along the periphery of the vent cover 224. In another example, the hinge part 222 may be positioned on an upper side or a lower side of the vent cover 224.

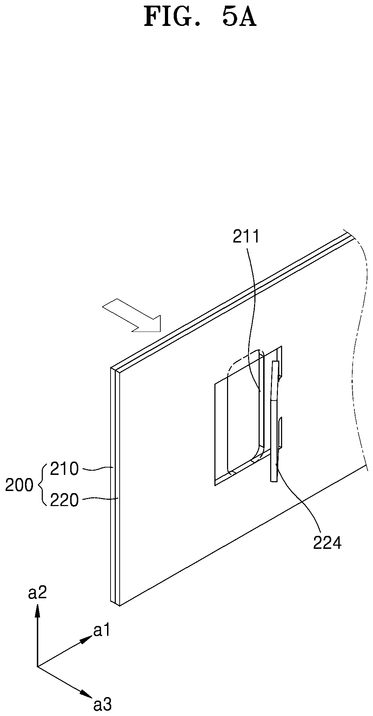

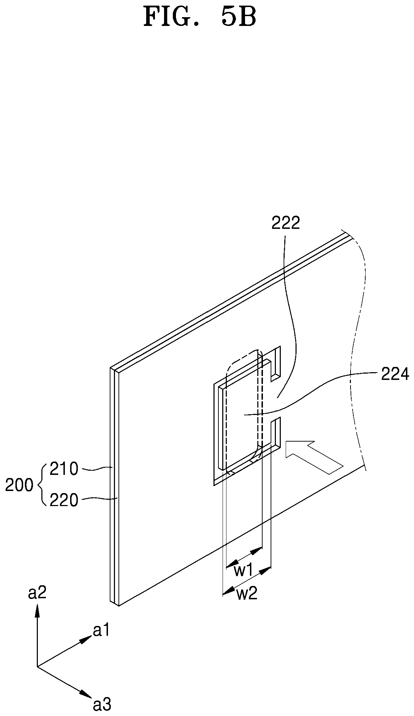

FIG. 5A shows a state in which the cover assembly 200 is under external pressure along the direction a3 according to some embodiments, and FIG. 5B shows a state in which the cover assembly 200 is under external pressure along a direction opposite the direction in FIG. 5A according to some embodiments.

Referring to FIG. 5A, if the external pressure is exerted on the first cover member 210 in the +a3 direction, i.e., in a direction oriented from the first cover member 210 toward the second cover member 220, the pressure is transferred to the vent cover 224 through the vent hole 211. If the external pressure is transferred to the vent cover 224 through the vent hole 211, a fracture may occur along the fracture line 221 that has a relatively thinner thickness compared to that of the hinge part 222. When the fracture occurs along the fracture line 221, the vent cover 224 may open along the fracture line 221 toward an outside (i.e., away from the first cover member 210 in the +a3 direction) centering around the hinge part 222. For example, the vent cover 224 may open in the +a3 direction that does not contact the first cover member 210.

Referring to FIG. 5B, if the external pressure is exerted on the second cover member 220 in the -a3 direction, i.e., in a direction oriented from the second cover member 220 toward the first cover member 210, the vent cover 224 may not open. The vent cover 224 may be partially supported on the first cover member 210 (i.e., portions of the fracture line 221 may overlap and be covered by the surface of the first cover member 210), so that the vent cover 224 may not open despite the external pressure exerted in the -a3 direction toward the first cover member 210, and may maintain its shape. For example, if the second width w2 of the vent cover 224 in the lengthwise direction (i.e., the a1 direction) of the cover assembly 200 exceeds the first width w1 of the vent hole 211, the hinge part 222 and a part of the fracture line 221 may be supported by the plane of the first cover member 210 in the exterior area of the vent hole 211, and therefore, the fracture line 221 will not be fractured and the vent cover 224 will not open in the -a3 direction toward the first cover member 210.

Referring to FIGS. 1 to 3, the cover assembly 200 may be placed to abut a surface on which the vent parts 14 of the battery cell 10 are arranged. The cover assembly 200 may be configured in such a way that the cover assembly 200 allows gas discharged from the vent parts 14 to pass in only one direction, and that the cover assembly 200 does not open in an opposite direction so as to prevent back-flowing gas from entering inside of the battery cell 10. For example, the cover assembly 200 may be arranged in such a way that the vent cover 224 of the second cover member 220 opens in only one direction which is an opposite direction to the battery cell 10.

In some embodiments, the cover assembly 200 may be arranged in such a way that the first cover member 210 faces the battery cell 10 and that the second cover member 220 faces an opposite side of the first cover member 210, e.g., the first cover member 210 may be between the second cover member 220 and the battery cells 10. For example, a first surface of the first cover member 210 may be arranged to contact (e.g., directly contact) the battery cells 10 (i.e., surfaces of the battery cells 10 on which the vent parts 14 are placed), and a second surface of the first cover member 210 may be opposite the first surface and arranged to contact (e.g., directly contact) the second cover member 220. If gas generated from the inside of any of the battery cells 10 is discharged through a corresponding vent part 14, a corresponding fracture line 221 in the second cover member 220 will be fractured to open a corresponding vent cover 224, to thereby allow gas to be discharged outside.

For example, a plurality of the battery cells 10 with the vent parts 14 located at a lower end in the height direction (e.g., the Z direction) may be arranged in a row in the first direction (e.g., the X direction) so as to position each of the vent parts 14 on one plane, e.g., coplanar with each other. The cooling plate 120 may be arranged under the battery cells 10, and may include pack vents 121 arranged in a row, each of which corresponds to (e.g., overlaps) each of the vent parts 14. The first cover member 210 may be placed between a lower part of the battery cell 10 and the cooling plate 120, wherein the first cover member 210 may include the vent holes 211, each of which is arranged in the first direction (e.g., the X direction) to correspond to (e.g., overlap) each of the vent parts 14. The second cover member 220 may be placed between the first cover member 210 and the cooling plate 120, with the second cover member 220 including vent covers 224, each of which is arranged in the first direction (e.g., the X direction) to correspond to (e.g., overlap) each vent hole 211. For example, when gas generated inside the battery cell 10 and is discharged through the vent parts 14 in a gravity direction (e.g., the -Z direction), the fracture line 221 located around the vent cover 224 of the second cover member 220 may be fractured to thereby open the vent cover 224, so that gas may successively pass through the vent part 14, the vent hole 211, an open part of the vent cover 224, and the pack vent 121, to thereby be discharged outside the battery pack.

In some embodiments, if the first cover member 210 and the second cover member 220 are successively placed on the plane where the vent part 14 of the battery cell 10 is located, the cover assembly 200 may prevent gas or foreign materials generated in one battery cell 10 from counter-flowing into another battery cell 10.

For example, a gas discharged in the gravity direction (e.g., the -Z direction) through the vent parts 14 may collide with the bottom of the battery pack, and thereafter, the gas and a by-product may be directed in the direction opposite to the gravity, to thereby exert pressure on the battery cell 10. As a part of the fracture line 221 and the hinge part 222 are supported on the plane of the first cover member 210 even if the external pressure is exerted on the vent cover 224 of the second cover member 220, the fracture line 221 will not be fractured, and the vent cover 224 may prevent gas and the foreign materials from flowing into the inside of the battery cell 10.

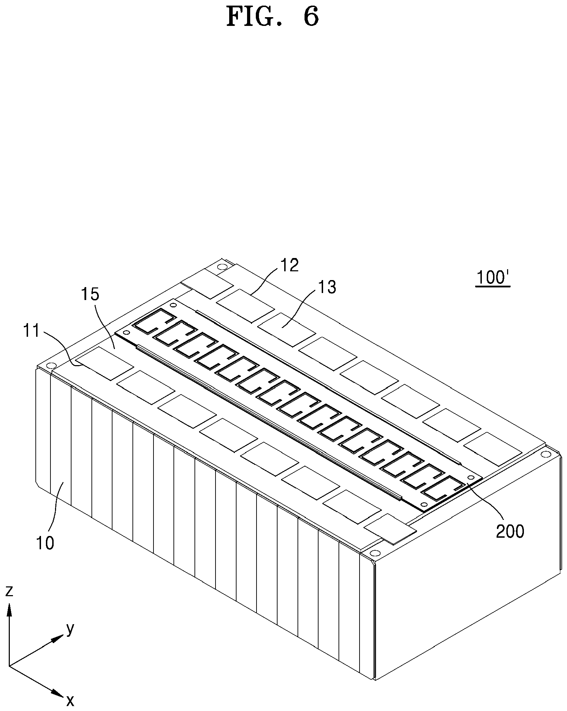

The vent parts 14 of the battery cell 10 may be located at a position other than the lower end in the height direction (Z direction) of the battery cell 10. For example, the vent parts 14 may be on an upper part of the battery cell 10, as will be described with reference to FIGS. 6-9.

FIG. 6 is a perspective view of a battery pack 100' with the vent parts 14 disposed on an upper part, according to some embodiments, FIG. 7 is a partially enlarged view of the battery pack 100' in FIG. 6, and FIG. 8 is an exploded perspective view of the battery pack 100' shown in FIG. 6.

Referring to FIGS. 6 to 9, the battery cell 10 may include the first electrode terminal 11 and the second electrode terminal 12 that have different polarities to each other and may be placed on the upper end in the height direction (e.g., the Z direction), and the vent parts 14 may be positioned between the first electrode terminal 11 and the second electrode terminal 12. The plurality of the battery cells 10 are arranged in the first direction (e.g., the X direction), and then the cover assembly 200 may be positioned on the upper end of the battery cells 10 according to the vent parts 14 arranged in a row. The cover assembly 200 may be arranged in such a manner that a first surface of the first cover member 210' is disposed to abut an upper end of the battery cell 10 having the vent parts 14 positioned thereon, and a second surface of the first cover member 210' abuts the second cover member 220'. For example, the first cover member 210' may be positioned on the upper part of the battery cell 10 in order to make each vent hole 211 to be matched with a corresponding vent part 14 of the battery cell 10, and the second cover member 220' may be positioned on the upper part of the first cover member 210' in order to make each vent cover 224 to correspond to the vent hole 211.

In some embodiments, the cover assembly 200 may be secured on the top of the battery cell 10 by, e.g., a slot securing member 231 and a hole securing member 232. In a state in which the first cover member 210' and the second cover member 220' are superimposed over each other, the first and the second cover members 210' and 220' may be fixed to the top of the battery cell 10 by means of the slot securing member 231 and the hole securing member 232. For example, the slot securing member 231 may secure the first cover member 210' and the second cover member 220', which are superimposed over each other, to the top of the battery cell 10 in the first direction (e.g., the X direction). The hole securing member 232 may secure the first cover member 210' and the second cover member 220' to the top of the battery cell 10 through punctured holes located at either end.

In some embodiments, if a gas is generated in the battery cell 10, the fracture line 221 of the second cover member 220' may be fractured to open the vent cover 224, so that the gas may be discharged through the vent part 14 and the vent hole 211 in the upward direction (e.g., the +Z direction). The discharged gas and foreign materials may be blocked from inflowing and counter-flowing in the opposite direction (e.g., the -Z direction) by the vent cover 224.

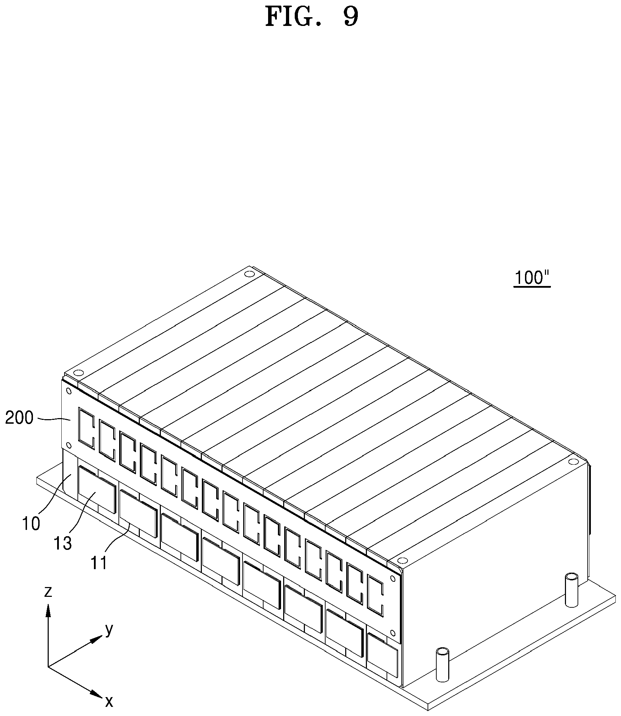

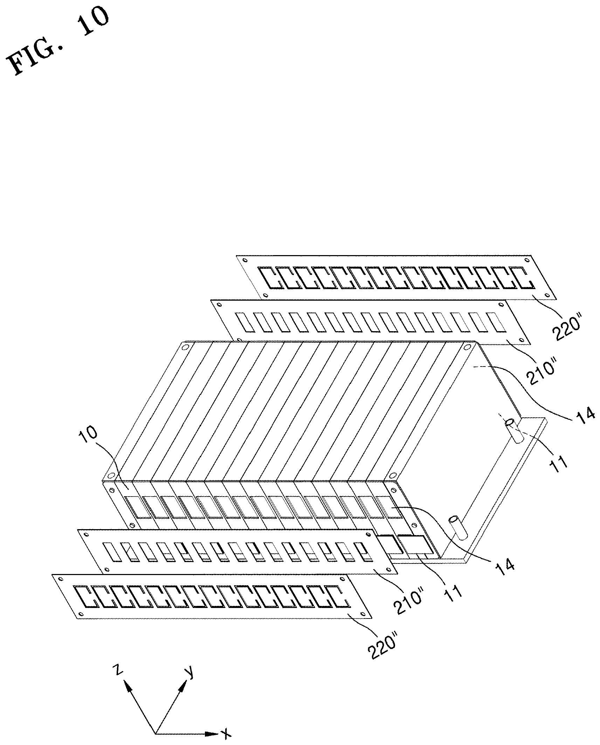

FIG. 9 is a perspective view of a battery pack 100" with the vent parts 14 disposed at a side according to some embodiments. FIG. 10 is an exploded perspective view of the battery pack shown in FIG. 9.

Referring to FIGS. 9 and 10, the battery cell 10 may include the first electrode terminal 11, the second electrode terminal, and the vent parts 14 on either side in the second direction (e.g., the Y direction), wherein the first and the second electrodes have different polarities. For example, along with the battery cells 10 arranged in a row in the first direction (e.g., the X direction), the first electrode terminals 11 and the first vent parts 14 may be respectively arranged in a row on one side of the battery pack, whereas the second electrode terminals and the second vent parts 14 may be respectively arranged in a row on the other side of the battery pack.

A pair of first cover members 210" and a pair of second cover members 220" may be arranged to abut either side of the battery cells 10, on which the first vent parts 14 and the second vent parts 14 are respectively positioned. For example, the pair of the first cover members 210" may be arranged in such a manner that the one surfaces abuts the first vent parts 14 and the second vent parts 14, respectively, whereas the other surfaces abut the second cover members 220", respectively. Each of the first cover members 210" may be placed on either side of the battery cells 10 in order to make the plurality of the vent holes 211 to be matched with the first vent parts 14 or the second vent parts 14 of the battery cells 10, and each of the second cover members 220" is placed on an outer side of the first cover member 210" in order to make each vent cover 224 to correspond to each vent hole 211. As described above, if gas is generated from the inside of the battery cell 10, the fracture line 221 of the second cover member 220" may be fractured to open the vent cover 224, so that gas may be discharged outside in a lateral direction (e.g., the Y direction).

According to some embodiments, it is possible to provide the battery pack, wherein the first cover member 210 and the second cover member 220 are superimposed and arranged to abut the vent parts 14 of the battery cells 10, and wherein the fracture lines 221 arranged on the second cover member 220 may be fractured only by external pressure acting in an outward direction of the battery cells 10. The battery pack according to some embodiments may be configured in such a manner that the part of the fracture line 221 disposed on the second cover member 220 and the hinge part 222 are supported by the plane of the first cover member 210, so that the vent cover 224 opens only in the outward direction of the battery cell 10. Thereby, it is possible to provide the battery pack with a convenient discharge path for the vent gas and prevent a backflow of gas and by-product.

Specific executions described in the present disclosure are embodiments, and do not limit the scope of the present disclosure in any way. For the sake of brevity of the specification, description of conventional electronic configurations, control systems, software, and other functional aspects of the above systems may be omitted. The connection or connection members of the lines between the components shown in the drawing for example represent functional connections and/or physical or circuit connections, which can be replaced in real devices or represented as additional various functional connections, physical connections, or circuit connections. It may not be an essential component for the application of the present disclosure if there is no specific mention, such as "essential" or "important".

The use of the terms "the" and similar indicative terms in the specification of the present disclosure (especially within the scope of patent claims) may correspond to both singular and plural. If the range is described in the present disclosure, it includes an invention that applies individual values belonging to the above range (if there is no description contrary to this), and each individual value constituting the above range is described in the detailed description of the present disclosure. Finally, without an explicit description or contrary description of the steps constituting the method according to the present disclosure, the steps may be performed in an appropriate order. The present disclosure is not limited to the order of description of the steps. In the present disclosure, the use of all examples or exemplary terms (e.g., etc.) is simply for describing the present disclosure in detail and the scope of the present disclosure is not limited by the above examples or exemplary terms unless limited by the claims.

By way of summation and review, according to the present disclosure, it is possible to provide a battery pack including a vent cover structure capable of making it easy to discharge a vent gas and preventing backflow of a discharge gas and by-product.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

Embodiments are set out in the following clauses:
Clause 1. A battery pack comprising: a plurality of battery cells including vent parts; a first cover member comprising vent holes respectively corresponding to the vent parts; and a second cover member comprising a vent cover corresponding to the vent holes, a fracture line forming a part of a periphery of the vent cover and a hinge part forming a part of a remaining periphery of the vent cover, wherein the second cover member is arranged to overwrap the first cover member to make a part of the fracture line and the hinge part disposed outside of the vent hole corresponding thereto.
Clause 2. The battery pack of Clause 1, wherein one surface of the first cover member is arranged to abut the vent parts and another surface of the first cover member is arranged to abut the second cover member.
Clause 3. The battery pack of Clause 1, wherein the hinge part is arranged in such a manner that the vent cover opens in a direction that the second cover member does not meet the first cover member, based on a fracture of the fracture line.
Clause 4. The battery pack of Clause 1, wherein the vent hole has a shape to match the vent parts, and wherein a part of the fracture line and the hinge part are supported on a surface of the first cover member adjoining the second cover member outside of the vent hole.
Clause 5. The battery pack of Clause 1, wherein a width of the vent cover formed between the hinge part and the fracture line is greater than a width of the vent hole corresponding to the vent cover.
Clause 6. The battery pack of Clause 1, wherein the fracture line has a C-shape with an opening at the hinge part.
Clause 7. The battery pack of Clause 1, wherein the first cover member and the second cover member each comprise a MICA sheet, a ceramic sheet, aluminum with a thickness less than or equal to 1 mm, carbon steel, an engineering plastic, and a Teflon film.
Clause 8. The battery pack of Clause 7, wherein the first cover member and the second cover member include different materials from each other.
Clause 9. The battery pack of Clause 1, wherein the plurality of battery cells are arranged in a first direction so that the vent parts are positioned on a plane, wherein the first cover member comprises a plurality of the vent holes arranged in a row, each of the vent holes being arranged in the first direction so that each of the plurality of vent holes corresponds to each of the vent parts, and wherein the second cover member comprises the plurality of vent covers arranged in a row, each of the vent covers being arranged in the first direction so that each of the plurality of vent covers corresponds to each of the vent holes.
Clause 10. The battery pack of Clause 9, wherein the battery cell includes an anode terminal and a cathode terminal on one surface in a height direction and the vent parts are provided on another surface opposite to the one surface; and wherein the first cover member and the second cover member are provided to abut the vent parts.
Clause 11. The battery pack of Clause 10, further comprising a cooling plate including a plane extending in the first direction and placed to abut the other surface of the battery cell, wherein the first cover member is placed between the other surface of the battery cell and the cooling plate, and wherein the second cover member is placed between the first cover member and the cooling plate.
Clause 12. The battery pack of Clause 9, wherein an anode terminal and a cathode terminal are placed on a surface of the battery cell, and the vent parts are placed between the anode terminal and the cathode terminal so that the first cover member and the second cover member meet the vent parts.
Clause 13. The battery pack of Clause 9, wherein the vent parts comprise a first vent part and a second vent part which are placed on different surfaces of the battery cell, wherein an anode terminal and the first vent part are placed on one side surface of each of the battery cell, and a cathode terminal and the second vent part are placed on another side surface corresponding to the one side surface, the plurality of the battery cells are arranged in the first direction so as to place the first vent part on one plane and to place the second vent part on another plane, and wherein a pair of the first cover members and a pair of the second cover members are placed to meet the first vent part and the second vent part, respectively.

## Claims

1. A battery pack, comprising:
battery cells including vent parts;
a first cover on the battery cells, the first cover including vent holes corresponding to the vent parts, respectively; and
a second cover overlapping the first cover and including vent covers corresponding to the vent holes in the first cover, respectively, each of the vent covers including a fracture line and a hinge part in a periphery of the vent cover, and the hinge part and a part of the fracture line in the second cover having a non-overlapping relationship with a corresponding one of the vent holes in the first cover.

2. The battery pack as claimed in claim 1, wherein a first surface of the first cover abuts the vent parts, and a second surface of the first cover abuts the second cover.

3. The battery pack as claimed in claim 1 or 2, wherein the hinge part and the part of the fracture line overlap the first cover, each of the vent covers being configured to open along the fracture line only in a direction oriented away from the first cover.

4. The battery pack as claimed in claim 1, 2 or 3, wherein:
each of the vent holes has a shape that matches a corresponding one of the vent parts; and
the hinge part and the part of the fracture line having the non-overlapping relationship with the corresponding one of the vent holes are supported on a surface of the first cover adjoining the second cover outside of the vent hole.

5. The battery pack as claimed in any preceding claim, wherein a first width of each of the vent covers between the hinge part and the fracture line is greater than a second width of each of the vent holes of a corresponding one of the vent covers.

6. The battery pack as claimed in any preceding claim, wherein the fracture line has a C-shape with an opening at the hinge part.

7. The battery pack as claimed in any preceding claim, wherein each of the first cover and the second cover each includes at least one of a MICA sheet, a ceramic sheet, an aluminum sheet with a thickness less than or equal to 1 mm, a carbon steel sheet, an engineering plastic sheet, and a polytetrafluroethylene film.

8. The battery pack as claimed in any preceding claim, wherein the first cover and the second cover include different materials from each other.

9. The battery pack as claimed in any preceding claim, wherein:
the battery cells are arranged in a first direction so that the vent parts are positioned on a plane;
the first cover includes the vent holes arranged in a row in the first direction, each of the vent holes overlapping a corresponding one of the vent parts; and
the second cover includes the vent covers arranged in a row in the first direction, each of the vent covers overlapping a corresponding one of the vent holes.

10. The battery pack as claimed in claim 9, wherein:
each of the battery cells includes an anode terminal and a cathode terminal on a first surface in a height direction, each of the vent parts being on a second surface opposite to the first surface; and
the first cover and the second cover abut the vent parts.

11. The battery pack as claimed in claim 10, further comprising a cooling plate extending in the first direction and abutting the second surface of each of the battery cells, the first cover being between the second surface of each of the battery cells and the cooling plate, and the second cover being between the first cover and the cooling plate.

12. The battery pack as claimed in claim 9, wherein:
each of the battery cells includes an anode terminal and a cathode terminal on a first surface of each of the battery cells, and
each of the vent parts is on the first surface between the anode terminal and the cathode terminal, the first cover and the second cover covering the vent parts.

13. The battery pack as claimed in claim 9, wherein:
each of the vent parts includes a first vent part and a second vent part on different surfaces of each of the battery cells,
each of the battery cells includes an anode terminal and a cathode terminal,
the anode terminal and the first vent part are on a first side surface of each of the battery cells, and the cathode terminal and the second vent part are on a second side surface of each of the battery cells, the battery cells being arranged in the first direction so as to place the first vent part on one plane and to place the second vent part on another plane, and
a pair of the first covers and a pair of the second cover are on the first vent part and the second vent part, respectively.
